# EUROPÄISCHE PATENTSCHRIFT

(11) **EP 4 291 442 B1**
(45) Veröffentlichungstag und Bekanntmachung des Hinweises auf die Patenterteilung: **12.08.2026**
(21) Anmeldenummer: 22700947.9
(22) Anmeldetag: 18.01.2022
(51) Int. Cl.: B60N 2/02, B60R 16/023, G06F 3/0338, G06F 3/044

(54) **BEDIENELEMENT FÜR EINEN SITZ EINES FORTBEWEGUNGSMITTELS**
OPERATING ELEMENT FOR A SEAT OF A MEANS OF TRANSPORTATION
ÉLÉMENT DE FONCTIONNEMENT POUR UN SIÈGE D'UN MOYEN DE TRANSPORT

(30) Priorität: 10.02.2021 DE 102021201262
(43) Veröffentlichungstag der Anmeldung: 20.12.2023
(73) Patentinhaber: VOLKSWAGEN AKTIENGESELLSCHAFT, 38440 Wolfsburg (DE)
(72) Erfinder: SCHULT, Martin, 38302 Wolfenbüttel (DE); MEYER, Thomas, 12205 Berlin (DE); FEIERABEND, Vanessa, 10555 Berlin (DE)
(86) Internationale Anmeldenummer: PCT/EP2022/050939
(87) Internationale Veröffentlichungsnummer: WO 2022/171386

(56) Entgegenhaltungen:
- EP-A1- 3 699 737
- DE-A1- 102015 115 044
- GB-A- 2 494 420

## Beschreibung

Die vorliegende Erfindung betrifft ein Bedienelement für einen Sitz eines Fortbewegungsmittels. Die Erfindung betrifft weiterhin ein Fortbewegungsmittel mit einem Sitz, der ein erfindungsgemäßes Bedienelement aufweist.

In Sitzen von Fortbewegungsmitteln sind in zunehmenden Maße Komfortfunktionen integriert, wie. z.B. eine Sitzklimatisierung oder Massagefunktionen. Daneben besteht die Möglichkeit, die Position, Höhe oder Neigung eines Sitzes sowie weitere Sitzeinstellungen elektrisch zu verstellen. Alles diese Funktionen müssen mittels eines oder mehrerer Bedienelemente bedient werden. Zu diesem Zweck werden im Wesentlichen zwei Ansätze verfolgt. Bei einem ersten Ansatz erfolgt die Bedienung über eine grafische Benutzerschnittstelle, beispielsweise im Armaturenbrett eines Kraftfahrzeugs. Bei Sitzen in der zweiten oder dritten Reihe eines Kraftfahrzeugs müssen dazu allerdings zusätzliche Display für die jeweilige Sitzreihe oder sogar jeden einzelnen Sitz bereitgestellt werden. Bei einem zweiten Ansatz erfolgt die Bedienung mittels dedizierter Schalter am jeweiligen Sitz, z.B. mittels mechanischer oder kapazitiver Taster. Tasterlösungen werden mit Zunahme des Funktionsumfangs allerdings raumeinnehmend und unübersichtlich. Durch große Bedieneinheiten können dabei Sitzfunktionen beeinträchtigt werden, was häufig zum Entfall einzelner Funktionen führt. Durch komplexe Bedienelemente kann es zudem zu Fehlbedienungen kommen.

Vor diesem Hintergrund beschreibt DE 10 2014 204 321 A1 einen Schalter zur Auswahl und Verstellung von sitzbezogenen Funktionen von Kraftfahrzeugsitzen. Der Schalter hat eine aus der Fläche erhabene im Wesentlichen zylindrischen Form mit flacher Stirnseite. Auf der Stirnseite sind mindestens zwei Tastenfelder zur Anwahl der zu bedienenden Funktion angeordnet. Am Umfang der zylindrischen Form ist ein Drehkranz zur Verstellung von ausgewählten Funktionen angeordnet.

DE 10 2015 115 044 A1 beschreibt ein System zur Eingabe von Befehlen und zur Bedienung unterschiedlicher Funktionen. Das System weist einen um eine Drehachse drehbaren Drehschalter, mit welchem Schaltzustände durch eine mechanische Drehbewegung eingestellt werden, sowie eine berührungsempfindliche Anzeige, welche zum Auswählen und Anzeigen einer einzustellenden Funktion ausgebildet ist, auf. Die berührungsempfindliche Anzeige ist an einer Stirnseite des Drehschalters in dem Drehschalter integriert angeordnet. Die Anzeige ist relativ zum Drehschalter feststehend ausgebildet und derart konfiguriert, durch eine Berührung eines Benutzers eine Funktion auszuwählen und eine Funktion auszulösen. Der Drehschalter ist derart konfiguriert, mit einer Drehbewegung um die Drehachse eine Intensität der mit der Anzeige ausgewählten Funktion einzustellen und eine Funktion auszuwählen, welche durch das Berühren der Anzeige ausgelöst wird.

GB 2 494 420 A beschreibt eine Multifunktions-Drehsteuerungsvorrichtung zur Steuerung eines Systems, mit einer manuell betätigbaren Dreheinrichtung, einer Schalteinrichtung und einer Anzeigeeinrichtung. Die Dreheinrichtung ist eingerichtet, dem System in Reaktion auf die Drehung der Dreheinrichtung ein Steuersignal zuzuführen. Die Schalteinrichtung ist eingerichtet, dem System in Reaktion auf die Betätigung der Schalteinrichtung ein Steuersignal zuzuführen. Die Anzeigeeinrichtung ist eingerichtet, Informationen in Bezug auf jeden einer Vielzahl von Betriebsmodi des Systems anzuzeigen.

Es ist eine Aufgabe der Erfindung, ein nutzerfreundlicheres Bedienelement für einen Sitz eines Fortbewegungsmittels bereitzustellen.

Diese Aufgabe wird durch ein Bedienelement mit den Merkmalen des Anspruchs 1 und durch ein Fortbewegungsmittel gemäß Anspruch 9 gelöst. Bevorzugte Ausgestaltungen der Erfindung sind Gegenstand der abhängigen Ansprüche.

Gemäß einem ersten Aspekt der Erfindung weist ein Bedienelement für einen Sitz eines Fortbewegungsmittels eine im Wesentlichen zylindrische Form mit einer flachen Stirnfläche auf, wobei in der Stirnfläche ein Display angeordnet ist. Das Bedienelement weist zudem einen um die Stirnfläche herum drehbaren Außenring auf. Mittels des drehbaren Außenrings ist eine zu bedienende Funktion oder eine Funktionsgruppe auswählbar. Mittels eines Betätigungsmechanismus ist die ausgewählte zu bedienende Funktion oder die ausgewählte Funktionsgruppe aufrufbar. Das Bedienelement ist ausgestaltet, nach dem Aufrufen einer zu bedienenden Funktion einen verfügbaren Einstellbereich für die aufgerufene Funktion auf dem Display anzuzeigen.

Bei der erfindungsgemäßen Lösung sind alle gewünschten Funktionen mit einem einzigen Bedienelement aufrufbar und bedienbar. Die für die Bedienung erforderlichen Elemente sind dabei auf eine sehr geringe Anzahl reduziert, wodurch das Bedienelement zum einen eine geringe Baugröße aufweist und zum anderen die Wahrscheinlichkeit von Fehlbedienungen reduziert wird. Mittels eines drehbaren Außenrings werden zunächst einzelne Funktionen oder Funktionsgruppen ausgewählt. Ein Beispiel für eine Funktionsgruppe sind Klimatisierungsfunktionen. Diese Funktionsgruppe kann beispielsweise die Funktionen Sitzheizung und Sitzkühlung umfassen. Eine ausgewählte Funktion oder Funktionsgruppe kann vom Nutzer mittels eines Betätigungsmechanismus aufgerufen werden. Wurde eine Funktion aufgerufen, kann mit dem drehbaren Außenring nun der zugehörige Funktionswert eingestellt werden. Wurde eine Funktionsgruppe aufgerufen, kann mit dem drehbaren Außenring hingegen nun eine Funktion dieser Funktionsgruppe oder gegebenenfalls eine Untergruppe ausgewählt und mit dem Betätigungsmechanismus aufgerufen werden. Nach dem Aufrufen einer zu bedienenden Funktion wird ein verfügbarer Einstellbereich auf dem Display angezeigt. Auf diese Weise wird dem Nutzer unmittelbar vermittelt, welcher Einstellbereich für die aufgerufene Funktion zur Verfügung steht. Wird zudem auch der aktuell eingestellte Funktionswert auf dem verfügbaren Einstellbereich dargestellt, kann der Nutzer sofort erfassen, ob eine gewünschte Änderung des Funktionswertes überhaupt möglich ist.

Gemäß einem Aspekt der Erfindung umfasst der Betätigungsmechanismus eine Berührungsfunktion des Displays. In diesem Fall ist das Display als berührungsempfindliches Display ausgestaltet. Diese Lösung hat den Vorteil, dass kein mechanischer Betätigungsmechanismus benötigt wird, wodurch das Bedienelement sehr verschleißarm ist. Um von einer aufgerufenen Funktion zu einer anderen Funktion wechseln zu können, wird auf dem Display vorzugsweise eine spezielle Schaltfläche dargestellt, mittels der der Nutzer zu einer nächsthöheren Hierarchieebene zurückkehren kann.

Gemäß einem Aspekt der Erfindung umfasst der Betätigungsmechanismus einen Drückmechanismus. Diese Lösung hat den Vorteil, dass ein Wechsel zwischen einer Drehbedienung und einer Berührungsbedienung bei der Bestätigung einer Auswahl vermieden wird. Zudem besteht die Möglichkeit, für eine stufenlose Verstellung eines Funktionswertes die Drehbedienung mittels des drehbaren Außenrings mit einer Betätigung des Drückmechanismus zu kombinieren. Beispielsweise kann der Nutzer mit dem drehbaren Außenring eine Funktion auswählen. Betätigt er nun den Drückmechanismus und hält diesen gedrückt, kann er den zugehörigen Funktionswert mit dem drehbaren Außenring einstellen. Lässt er den Drückmechanismus wieder los, kann das Bedienelement wieder in einen Modus wechseln, in dem eine Funktion ausgewählt werden kann.

Gemäß einem Aspekt der Erfindung umfasst der Betätigungsmechanismus zumindest eine seitlich am Bedienelement angeordnete Taste. Auch diese Lösung hat den Vorteil, dass ein

Wechsel zwischen einer Drehbedienung und einer Berührungsbedienung bei der Bestätigung einer Auswahl vermieden wird. Die Taste kann in den drehbaren Außenring integriert sein oder beispielsweise unterhalb des drehbaren Außenrings angeordnet sein. Vorzugsweise werden zwei Tasten bereitgestellt. Eine erste Taste dient der Bestätigung einer Auswahl, eine zweite Taste erlaubt die Rückkehr zur nächsthöheren Hierarchieebene. Auf diese Weise wird kann die Anzahl von Schaltflächen auf dem Display reduziert werden.

Gemäß einem Aspekt der Erfindung ist der drehbare Außenring endlos drehbar oder weist Begrenzungen auf. Bei einer ersten Ausgestaltung des Drehbereichs des drehbaren Außenrings ist dieser endlos im Uhrzeigersinn oder gegen den Uhrzeigersinn drehbar. Dies erlaubt es, eine gegebenenfalls geringe Displaygröße zu kompensieren, sodass eine schnelle Navigation im Menü ermöglicht wird. Bei einer zweiten Ausgestaltung des Drehbereichs des drehbaren Außenrings ist sowohl im Uhrzeigersinn als auch gegen den Uhrzeigersinn ein Anschlag vorgesehen. Dies führt zwar zu geringen Einschränkungen bei der Menüführung, ist allerdings vorteilhaft für das stufenlose Verstellen von Funktionswerten.

Gemäß einem Aspekt der Erfindung ist das Display rund ausgestaltet. Dies hat den Vorteil, dass der innerhalb des drehbaren Außenrings verfügbare Bereich optimal durch das Display ausgenutzt werden kann, d.h. der für eine Anzeige von Informationen verfügbare Bereich wird maximiert. Dies ist insbesondere dann vorteilhaft, wenn das Bedienelement möglichst klein ausgeführt werden soll.

Gemäß einem Aspekt der Erfindung ist das Bedienelement in einer Armlehne des Sitzes angeordnet. Das Bedienelement ist dabei vorzugsweise im vorderen Bereich der Armlehne verortet. Dies hat den Vorteil, dass es durch den Nutzer gut erreichbar ist. Zudem ist für den Nutzer intuitiv ersichtlich, welchem Zweck das Bedienelement dient.

Gemäß einem Aspekt der Erfindung ist ein Winkel oder eine Längsposition des Bedienelements in Abhängigkeit eines Sitzmodus einstellbar. Insbesondere bei Sitzen, die einen aufrechten Sitzzustand als auch einen liegenden Sitzzustand ermöglichen, kann die Bedienbarkeit des Bedienelements erheblich verbessert werden, wenn der Winkel und die Längsposition des Bedienelements situativ angeglichen werden. Ohne eine solche situative Anpassung sollten Winkel und Längsposition zumindest einer Kompromisslage entsprechen, die es ermöglicht, das Bedienelement in diversen Situation zu betätigen.

Besonders vorteilhaft wird ein erfindungsgemäßes Bedienelement in einem Sitz eines Fortbewegungsmittels eingesetzt. Bei dem Fortbewegungsmittel kann es sich insbesondere um ein Kraftfahrzeug handeln, z.B. einen Personenkraftwagen oder ein Nutzfahrzeug. Der Sitz kann dabei beispielsweise ein Komfortsitz sein, auch als Captain Chair bezeichnet. Bei Personenkraftwagen ist eine Verwendung eines erfindungsgemäßen Bedienelements besonders in der zweiten und dritten Sitzreihe vorteilhaft. Eine Umsetzung in der ersten Sitzreihe ist allerdings ebenfalls möglich. Bei dem Fortbewegungsmittel kann es sich alternativ auch um ein Schiff, ein Schienenfahrzeug oder ein Fluggerät handeln, z.B. einen Volocopter, etc.

Weitere Merkmale der vorliegenden Erfindung werden aus der nachfolgenden Beschreibung und den angehängten Ansprüchen in Verbindung mit den Figuren ersichtlich.
- Fig. 1: zeigt schematisch ein erstes Ausführungsbeispiel eines erfindungsgemäßen Bedienelements für einen Sitz eines Fortbewegungsmittels;
- Fig. 2: zeigt schematisch ein zweites Ausführungsbeispiel eines erfindungsgemäßen Bedienelements für einen Sitz eines Fortbewegungsmittels;
- Fig. 3: zeigt schematisch ein drittes Ausführungsbeispiel eines erfindungsgemäßen Bedienelements für einen Sitz eines Fortbewegungsmittels;
- Fig. 4: stellt schematisch ein Bedienbeispiel mittels eines erfindungsgemäßen Bedienelements dar;
- Fig. 5: zeigt schematisch die Anordnung eines erfindungsgemäßen Bedienelements in einer Armlehne eines Sitzes in einer Normalstellung des Sitzes; und
- Fig. 6: zeigt schematisch die Anordnung eines erfindungsgemäßen Bedienelements in einer Armlehne eines Sitzes in einer Entspannungsstellung des Sitzes.

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

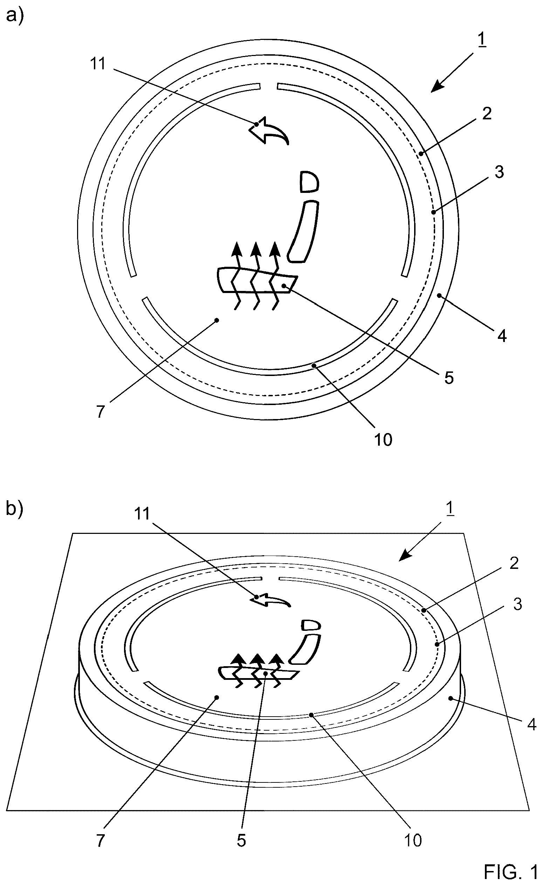

Fig. 1 zeigt schematisch ein erstes Ausführungsbeispiel eines erfindungsgemäßen Bedienelements 1 für einen Sitz eines Fortbewegungsmittels. Dabei zeigt Fig. 1a) eine Draufsicht auf das Bedienelement 1, Fig. 1b) eine perspektivische Ansicht. Das Bedienelement 1 hat eine im Wesentlichen zylindrischen Form mit einer flachen Stirnfläche 2. In der Stirnfläche 2 ist ein Display 3 angeordnet, das einen Teil der Stirnfläche 2 oder auch die gesamte Stirnfläche 2 einnehmen kann. Vorzugsweise ist das Display 3 rund ausgestaltet, sodass der verfügbare Bereich der Stirnfläche 2 optimal durch das Display 3 ausgenutzt werden kann. Um die Stirnfläche 2 herum ist ein drehbarer Außenring 4 angeordnet. Der drehbare Außenring 4 kann endlos drehbar sein, d.h. im Uhrzeigersinn und gegen den Uhrzeigersinn ohne Begrenzung drehbar. Alternativ kann der drehbare Außenring 4 sowohl im Uhrzeigersinn als auch gegen den Uhrzeigersinn einen Anschlag aufweisen. Mittels des drehbaren Außenrings 4 kann eine zu bedienende Funktion 5 oder eine Funktionsgruppe ausgewählt werden. Im dargestellten Beispiel ist als zu bedienende Funktion 5 die Sitzheizung ausgewählt. Das Bedienelement 1 weist zusätzliche einen Betätigungsmechanismus auf, mit dem die ausgewählte zu bedienende Funktion 5 oder die ausgewählte Funktionsgruppe aufgerufen werden kann. In Fig. 1 handelt es sich beim Betätigungsmechanismus um eine Berührungsfunktion 7 des Displays 3, d.h. das Display 2 ist ein berührungsempfindliches Display 3. Das Aufrufen der Sitzheizung kann beispielsweise erfolgen, indem der Nutzer auf das auf dem Display 3 angezeigt Symbol für die Sitzheizung tippt. Nach dem Aufrufen der zu bedienenden Funktionen 5 wird auf dem Display 3 der verfügbare Einstellbereich 10 für die aufgerufene Funktion angezeigt. In diesem Beispiel stehen für die Sitzheizung drei Heizstufen zur Verfügung, die mittels des drehbaren Außenrings 4 eingestellt werden können. Zudem kann die Sitzheizung natürlich ausgestellt werden. Mittels einer auf dem Display 3 angezeigten Schaltfläche 11 kann der Nutzer das Einstellen der Sitzheizung beenden und zu einer nächsthöheren Hierarchieebene zurückkehren.

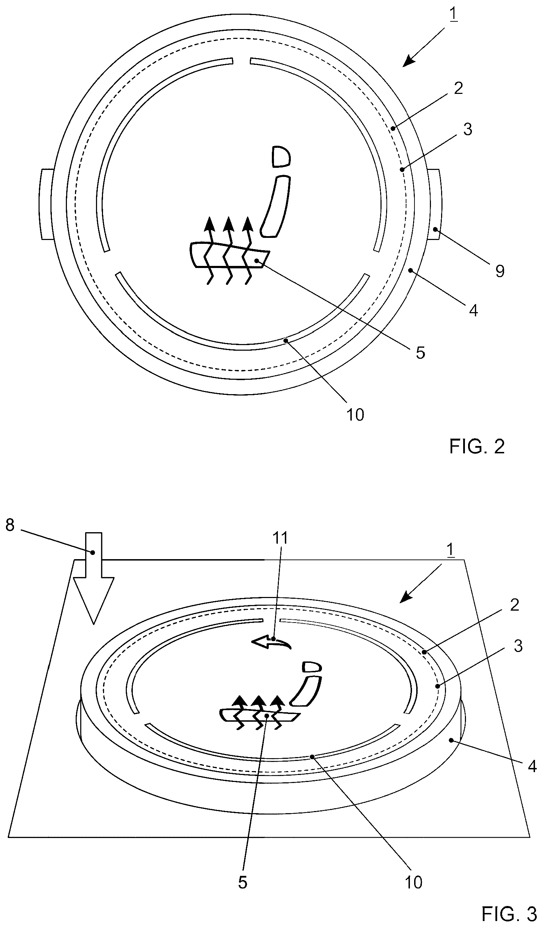

Fig. 2 zeigt schematisch ein zweites Ausführungsbeispiel eines erfindungsgemäßen Bedienelements 1 für einen Sitz eines Fortbewegungsmittels. Dargestellt ist in diesem Fall eine Draufsicht auf das Bedienelement 1. Das Bedienelement 1 entspricht weitgehend dem Bedienelement 1 aus Fig. 1, weist aber seitlich zwei Tasten 9 auf. Die Tasten 9 können in den drehbaren Außenring 4 integriert sein oder beispielsweise unterhalb des drehbaren Außenrings 4 angeordnet sein. Eine erste Taste 9 dient der Bestätigung einer Auswahl, beispielsweise die rechts angeordnete Taste 9. Diese Taste 9 bildet somit den Betätigungsmechanismus, mit dem die ausgewählte zu bedienende Funktion 5 oder die ausgewählte Funktionsgruppe aufgerufen werden kann. Eine zweite Taste 9 erlaubt die Rückkehr zur nächsthöheren Hierarchieebene, beispielsweise die links angeordnete Taste 9. Eine auf dem Display 3 dargestellte Schaltfläche für diesen Zweck kann somit entfallen. Bei diesem Ausführungsbeispiel ist das Display 3 nicht notwendigerweise berührungsempfindlich. Es kann aber natürlich dennoch ein berührungsempfindliches Display 3 verwendet werden. In diesem Fall besteht die Möglichkeit, neben den Tastendrücken auch Eingaben über das berührungsempfindliche Display 3 zu verarbeiten.

Fig. 3 zeigt schematisch ein drittes Ausführungsbeispiel eines erfindungsgemäßen Bedienelements 1 für einen Sitz eines Fortbewegungsmittels. Dargestellt ist in diesem Fall eine perspektivische Ansicht des Bedienelements 1. Das Bedienelement 1 entspricht weitgehend dem Bedienelement 1 aus Fig. 1, weist aber einen Drückmechanismus 8 auf. Mittels des Drückmechanismus 8 kann die ausgewählte zu bedienende Funktion 5 oder die ausgewählte Funktionsgruppe aufgerufen werden, d.h. der Drückmechanismus 8 bildet den Betätigungsmechanismus. Im dargestellten Beispiel ist das Display 3 ein berührungsempfindliches Display 3. Mittels einer auf dem Display 3 angezeigten Schaltfläche 11 kann der Nutzer das Einstellen der aufgerufenen Funktion beenden und zu einer nächsthöheren Hierarchieebene zurückkehren.

Selbstverständlich können die in den drei Ausführungsbeispielen in Fig. 1, Fig. 2 und Fig. 3 gezeigten Betätigungsmechanismen 7, 8, 9 auch kombiniert werden.

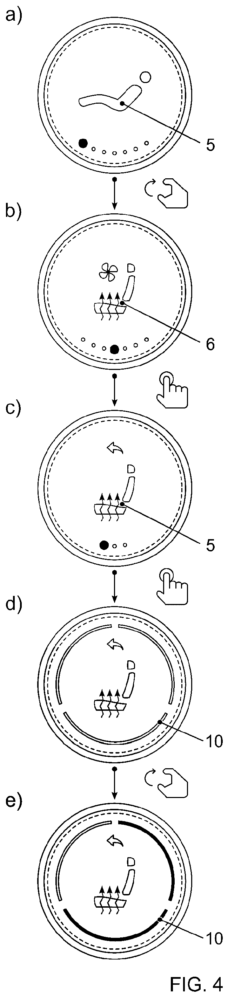

Fig. 4 stellt schematisch ein Bedienbeispiel mittels eines erfindungsgemäßen Bedienelements 1 dar. In diesem Bedienbeispiel möchte der Nutzer die Heizstufe der Sitzheizung einstellen. In Fig.4a) befindet sich der Nutzer zunächst noch in der obersten Hierarchieebene der Sitzbedienung. In dieser Ebene stehen sieben verschiedene zu bedienende Funktionen 5 oder Funktionsgruppen 6 zur Verfügung, was durch die sieben auf dem Display angezeigten Punkte visualisiert wird. Die aktuell ausgewählte Funktion, in diesem Fall die Einstellung des Sitzmodus, wird durch den größeren gefüllten Punkt auf dem Display hervorgehoben. Bei der Einstellung des Sitzmodus kann der Nutzer beispielsweise zwischen einer Normallstellung, einer Entertainment-Stellung, einer Entspannungsstellung und einer nutzerdefinierten Stellung wählen. Durch Drehen des drehbaren Außenrings gelangt der Nutzer zur Funktionsgruppe 6 Sitzklima. Dies ist in Fig. 4b) dargestellt. Durch Betätigen des Betätigungsmechanismus, z.B. durch Antippen des Displays, wird nun die Funktionsgruppe 6 Sitzklima aufgerufen. Diese umfasst beispielsweise die drei Funktionen Sitzheizung, Sitzlüftung und Sitzkühlung. Wie in Fig. 4c) zu sehen ist, ist nach dem Aufrufen der Funktionsgruppe 6 bereits die Funktion 5 Sitzheizung ausgewählt. Durch erneutes Betätigen des Betätigungsmechanismus kann der Nutzer nun die ausgewählte Funktion 5 aufrufen. Nach dem Aufrufen der Funktion wird der für diese Funktion 5 verfügbare Einstellbereich 10 auf dem Display angezeigt. Dies ist in Fig. 4d) dargestellt. Im gezeigten Beispiel ist die Sitzheizung zunächst noch ausgeschaltet, was durch die drei nicht gefüllten Balken des verfügbaren Einstellbereichs 10 veranschaulicht wird. Mittels des drehbaren Außenrings kann der Nutzer die Sitzheizung auf den gewünschten Wert einstellen. Wie in Fig. 4e) durch die zwei gefüllten Balken des verfügbaren Einstellbereichs 10 veranschaulicht wird, hat der Nutzer die Sitzheizung auf die zweite Stufe eingestellt. Durch Antippen des auf dem Display angezeigten Pfeils kann der Nutzer nun wieder zur nächsthöheren Hierarchieebene zurückkehren.

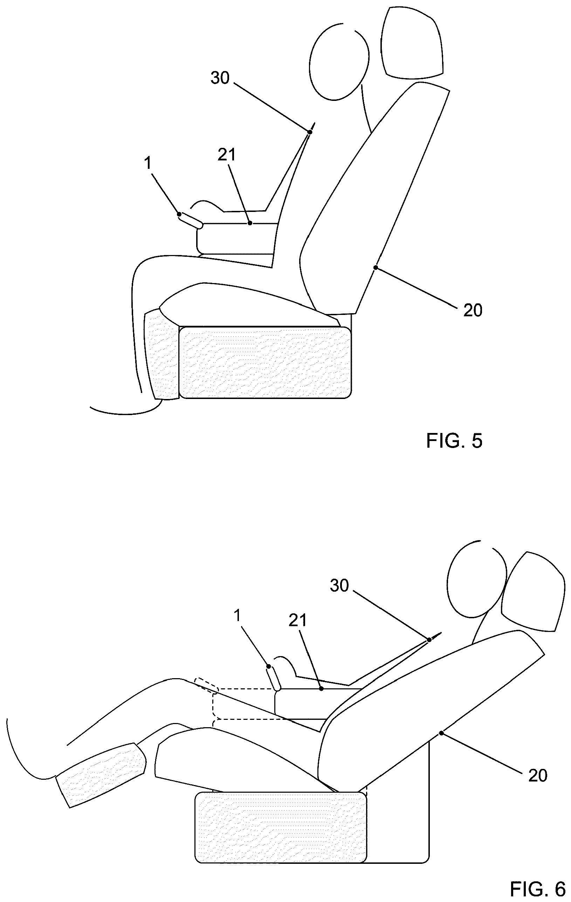

Fig. 5 zeigt schematisch die Anordnung eines erfindungsgemäßen Bedienelements 1 in einer Armlehne 21 eines Sitzes 20 in einer Normalstellung des Sitzes 20, in der sich der Nutzer 30 in einer aufrechten Position befindet. Fig. 6 zeigt schematisch die Anordnung des erfindungsgemäßen Bedienelements 1 in der Armlehne 21 des Sitzes 20 in einer Entspannungsstellung des Sitzes 20, in der sich der Nutzer 30 in einer liegenden Position befindet. Das Bedienelement 1 ist im vorderen Bereich der Armlehne 21 verortet. Damit der Nutzer 30 das Bedienelement 1 sowohl in der aufrechten Position als auch in der liegenden Position komfortabel bedienen kann, ist es vorteilhaft, den Winkel und/oder die Längsposition des Bedienelements 1 situativ anzupassen. Ohne eine solche situative Anpassung sollten Winkel und Längsposition zumindest einer Kompromisslage entsprechen, die es ermöglicht, das Bedienelement 1 aus diversen Positionen zu betätigen.

### Bezugszeichenliste

- 1: Bedienelement
- 2: Stirnfläche
- 3: Display
- 4: Drehbarer Außenring
- 5: Funktion
- 6: Funktionsgruppe
- 7: Berührungsfunktion
- 8: Drückmechanismus
- 9: Taste
- 10: Einstellbereich
- 11: Schaltfläche
- 20: Sitz
- 21: Armlehne
- 30: Nutzer

## Patentansprüche

1. Bedienelement (1) für einen Sitz (20) eines Fortbewegungsmittels, mit einer im Wesentlichen zylindrischen Form mit einer flachen Stirnfläche (2), wobei in der Stirnfläche (2) ein Display (3) angeordnet ist, und mit einem um die Stirnfläche (2) herum drehbaren Außenring (4), wobei mittels des drehbaren Außenrings (4) eine zu bedienende Funktion (5) oder eine Funktionsgruppe (6) auswählbar ist und mittels eines Betätigungsmechanismus (7, 8, 9) die ausgewählte zu bedienende Funktion (5) oder die ausgewählte Funktionsgruppe (6) aufrufbar ist,
**dadurch gekennzeichnet, dass** das Bedienelement (1) ausgestaltet ist, nach dem Aufrufen einer zu bedienenden Funktion (5) einen verfügbaren Einstellbereich (10) für die aufgerufene Funktion auf dem Display (3) anzuzeigen.

2. Bedienelement (1) gemäß Anspruch 1, wobei der Betätigungsmechanismus eine Berührungsfunktion (7) des Displays (3) umfasst.

3. Bedienelement (1) gemäß Anspruch 1 oder 2, wobei der Betätigungsmechanismus einen Drückmechanismus (8) umfasst.

4. Bedienelement (1) gemäß einem der vorherigen Ansprüche, wobei der Betätigungsmechanismus zumindest eine seitlich am Bedienelement (1) angeordnete Taste (9) umfasst.

5. Bedienelement (1) gemäß einem der vorherigen Ansprüche, wobei der drehbare Außenring (4) endlos drehbar ist oder Begrenzungen aufweist.

6. Bedienelement (1) gemäß einem der vorherigen Ansprüche, wobei das Display (3) rund ausgestaltet ist.

7. Bedienelement (1) gemäß einem der vorherigen Ansprüche, wobei das Bedienelement (1) in einer Armlehne (21) des Sitzes (20) angeordnet ist.

8. Bedienelement (1) gemäß Anspruch 7, wobei ein Winkel oder eine Längsposition des Bedienelements (1) in Abhängigkeit eines Sitzmodus einstellbar ist.

9. Fortbewegungsmittel mit zumindest einem Sitz (20), **dadurch gekennzeichnet, dass** der Sitz (20) ein Bedienelement (1) gemäß einem der Ansprüche 1 bis 8 aufweist.

## Claims

1. Control element (1) for a seat (20) of a means of transport, having a substantially cylindrical shape with a flat end face (2), a display (3) being arranged in the end face (2), and having an outer ring (4) rotatable around the end face (2), a function (5) to be controlled or a function group (6) being selectable by means of the rotatable outer ring (4) and the selected function (5) to be controlled or the selected function group (6) being able to be called up by means of an actuating mechanism (7, 8, 9),
**characterized in that** the control element (1) is designed to display an available setting range (10) for the called-up function (5) on the display (3) after a function to be controlled has been called up.

2. Control element (1) according to claim 1, wherein the actuating mechanism comprises a touch function (7) of the display (3).

3. Control element (1) according to claim 1 or 2, wherein the actuating mechanism comprises a push mechanism (8).

4. Control element (1) according to any of the preceding claims, wherein the actuating mechanism comprises at least one button (9) arranged laterally on the control element (1).

5. Control element (1) according to any of the preceding claims, wherein the rotatable outer ring (4) is rotatable endlessly or has limits.

6. Control element (1) according to any of the preceding claims, wherein the display (3) is round.

7. Control element (1) according to any of the preceding claims, wherein the control element (1) is arranged in an armrest (21) of the seat (20).

8. Control element (1) according to claim 7, wherein an angle or longitudinal position of the control element (1) is adjustable depending on a seating mode.

9. Means of transport comprising at least one seat (20),
**characterized in that** the seat (20) has a control element (1) according to any of claims 1 to 8.

## Revendications

1. Élément de commande (1) pour un siège (20) d'un moyen de locomotion, comportant une forme sensiblement cylindrique avec une face frontale (2) plate, dans lequel un écran d'affichage (3) est disposé dans la face frontale (2), et comportant une bague extérieure (4) pouvant tourner autour de la face frontale (2), dans lequel une fonction (5) à commander ou un groupe de fonctions (6) peut être sélectionné au moyen de la bague extérieure (4) pouvant tourner et la fonction (5) à commander sélectionnée ou le groupe de fonctions (6) sélectionné peut être appelé au moyen d'un mécanisme d'actionnement (7, 8, 9),
**caractérisé en ce que** l'élément de commande (1) est configuré pour afficher sur l'écran d'affichage (3) une zone de réglage (10) disponible pour une fonction appelée après l'appel de la fonction (5) à commander.

2. Élément de commande (1) selon la revendication 1, dans lequel le mécanisme d'actionnement comprend une fonction tactile (7) de l'écran d'affichage (3).

3. Élément de commande (1) selon la revendication 1 ou 2, dans lequel le mécanisme d'actionnement comprend un mécanisme de poussée (8).

4. Élément de commande (1) selon l'une des revendications précédentes, dans lequel le mécanisme d'actionnement comprend au moins une touche (9) disposée latéralement sur l'élément de commande (1).

5. Élément de commande (1) selon l'une des revendications précédentes, dans lequel la bague extérieure (4) pouvant tourner peut tourner sans fin ou présente des limitations.

6. Élément de commande (1) selon l'une des revendications précédentes, dans lequel l'écran d'affichage (3) est de forme ronde.

7. Élément de commande (1) selon l'une des revendications précédentes, dans lequel l'élément de commande (1) est disposé dans un accoudoir (21) du siège (20).

8. Élément de commande (1) selon la revendication 7, dans lequel un angle ou une position longitudinale de l'élément de commande (1) peut être réglé en fonction d'un mode de siège.

9. Moyen de locomotion comportant au moins un siège (20),
**caractérisé en ce que** le siège (20) présente un élément de commande (1) selon l'une des revendications 1 à 8.
